# EUROPEAN PATENT SPECIFICATION

(11) **EP 0 436 472 B1**
(45) Date of publication and mention of the grant of the patent: **29.05.1996**
(21) Application number: 90830005.6
(22) Date of filing: 03.01.1990
(51) Int. Cl.: H04N 7/16

(54) **System for transmitting and receiving television signals**
System für das Senden und Empfangen von Fernsehsignalen
Système pour transmettre et recevoir des signaux de télévision

(43) Date of publication of application: 10.07.1991
(73) Proprietor: EDICO S.r.l., I-00197 Roma (IT)
(72) Inventor: Zappala, Giuseppe, I-10128 Torino (IT)
(74) Representative: Eisenführ, Speiser & Partner

(56) References cited:
- EP-A- 0 120 615
- WO-A-85/00718
- DE-C- 3 802 612
- FR-A- 2 530 901
- ELEKTRONIK, vol. 38, no. 6, March 1989, pages 56-58, Munich, DE; M. JÜNKE: "Digitales Fernsehkonzept für Satelliten-Pay-TV"
- IDEM

## Description

Present invention refers to a method for receiving and recording television signals in accordance with the preamble of claim 1 and to a system for trans mitting and receiving television signals in accordance with the preamble of claim 3. Such system is known from ELEKTRONIK, Vol.38, No. 6, March 1989, pages 56 to 58, Munich, DE.

It is well known that systems exist to distribute (e.g. by cable) television programs by payment wherein the television signal is coded (cyphered) before transmission. so as to scramble it; in order to receive such scrambled signals there is the need of a suitable decoder (decypherer) so as to restore the original signal and allow it to be correctly reproduced on the screen and on the loudspeaker. Receivers including a decoder, or decoders to be added to an exixting receiver, are normally lent free, but in order to work they require that a hourly sun is paid, for instance by means of tokens or coins; the apparatus ci course is provided with a suitable ccin inserting device.

Such known systems show many disadvantages: receivers must be provided with a tamperproof slot device (which as a consequence is rather comolicate and expensive); the user must provide himself with suitable tokens (or with suitable coins) in sufficient amount; if the user has no more tokens while the transmission is still running (it is not always easy to evaluate in advance the length of a transmission), the user looses a part of the program and will be of course unsatisfied; tokens are cumbersome and heavy; etc.

Also known from european patent publication EP-A-0243312 is a microprocessor driven decoding system, which can be activate by means of a CPTV card (Pay T.V. Card), in turn comprising a further microprocessor, and a non-volatile read-write memory; such a card, beside containing the decoding key, can store the working time and may be recharged when the scheduled time is over.

Such a system however needs an expensive card. which should be recharged in order to amortise the cost; recharging operation takes time and is generally discomfortable for the user.

From japanese patent application JP-A-82093419 it is known to use a card with stored the code number of a program to be received and the key code to decode it: sucn a card can therefore be used only once and is intended to pay in advance only one determined program.

Rather than providing an only once usable card it is known from ELEKTRONIK, Vol.38, No. 6, March 1989, pages 56 to 58, Munich, DE, to provide "smart cards" for keying decoders for encrypted Pay-TV-signals. The smart card carries a non-volatile memory in which a secret code necessary to activate the decoder is prerecorded.

When recording TV-signals it is desirable to exclude advertising programme parts from the record since advertising is not only annoying to many viewers but is also tape-consuming. However, there is a problem of automatically detecting advertisement programme parts since those parts are not electronically marked or otherwise distinguished over the useful parts of the transmitted television signal.

The object of the invention is to obtain TV records free of advertisement in the case of coded television signals.

This object is solved in accordance with the features included in claims 1 and 3.

An advantageous apparatus for receiving coded television signals transmitted in the system according to the invention is characterized by the features of claim 3.

Other objects and advantages of the present invention will be clear from the detailed description which follows and from the attached drawings, which are supplied only as an explanatory and not limiting example, wherein:
figure 1 shows schematically a known procedure to code and decode a message;
figure 2 shows schematically the block diagram of a receiver according to the invention;
figure 3 shows the logic block diagram of a decoding system according to the invention.

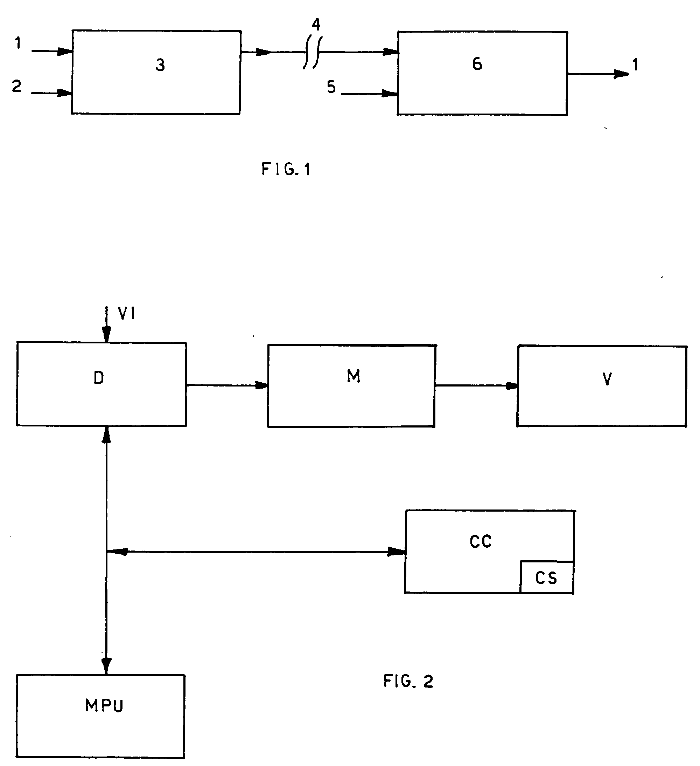

In figure 1, which schematically shows, as an example, a procedure to code and decode a message, reference number 1 indicates the message to be coded (ciphered); reference number 2 indicates the coding key (cipher); number 3 indicates a circuit which performs the coding operation (ciphering); number 4 indicates the transmission channel, onto which the ciphered message is transmitted.

As it can be clearly seen from figure 1, the ciphered signal is deciphered by means of the deciphering operation through a key 5 in the decoding (deciphering) circuit 6; in this way the original message 1 is recovered.

Figure 2 shows the block diagram of a receiver according to the invention, in the particular case of the reception of teletext ciphered signals; the symbol VI indicates the video ciphered signal, which is fed to the decoder (decipherer) D; symbol M indicates the page memory, customary in such type of receiver; symbol MPU indicates the intelligent operating unit (microprocessor); symbol CC indicates the card, containing the secret code CS, which could also be the deciphering key 5.

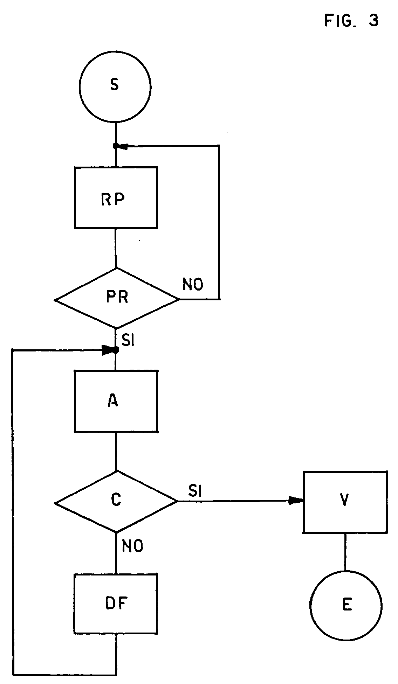

The operation of circuit of figure 2 will be clear looking at figure 3, which shows the logic blocks of a decoding system according to the invention. In figure 3 letter S indicates the starting block; next block is block RP (page request); then there is block PR (page received?), which is a decision block; output SI (Yes) passes the control to next block A; output NO passes the control back to preceding block RP.

Block A performs the analysis of the page received; then it passes the control to block C. Block C is a decision block; output SI (text not ciphered) passes the control to block V (displaying); output NO instead passes the control to block DF (deciphering), which, in turn, passes the control back to block A.

Block E (end) indicates the end of the operation.

From the above it appears that coding and decoding operations depend on the availability of the ciphering key, which, in the particular case, may consist in a simple semicustom hardware, necessary and inviolable (ASIC) contained in the decoder.

Physical implementation of the hardware is of course up to the receiver manufacturer and in any case shall conform to usual industrial and commercial rules.

The card contains an element to memorize data, which may be, e.g. a magnetic means, onto which data may be recorded by the receiver, for instance the number of hours the receiver has operated.

The memory element typically contains a secret code, and a prerecorded number of permitted operating hours; the decoder, which contains means to read the element and means to write onto it, compares initially the secret code CS recorded onto the card to the code contained in the ciphered transmission, and, if they match, provides for deciphering the transmission and displaying it; in a preferred embodiment the decoder is coupled to a videorecorder, of known type, capable of recording television transmissions; if a ciphered transmission is received, and the secret codes match, the decoder provides for automatically activating the recording of the transmission.

In this way it is possible, for instance, to record the transmission leaving off inserted commercial advertising, if such inserts do not contain the secret code.

The secret code may typically be contained in one of the frame retrace lines; for instance it may be inserted, in ciphered form, or in any non-displayable form, in one of the teletext pages.

The decoder moreover provides for recording onto the card, in place of the initial number of permitted operating hours, a new number, on and on decreasing, representing the still available hours. Of course when the number is turned zero the decoder disactivates itself.

As an alternative, the card may contain only the secret code onto a non-alterable element and have a fixed period of validity, e.g. one week; at the end of the period the secret code is changed in transmission, the card is no more useful, and a new one must be purchased; such weekly cards might for instance be sold together with a printed matter, also weekly, containing the programs of the week, issued by the same company which also transmits the programs. All programs, or only the more important of them, might be ciphered.

The secret code may represent only a plain identification code, or it may also represent the key word necessary to decipher the transmission; in the latter case, and in case of the weekly card, also the key word will necessarily change each week, which is much more advisable.

The example shown in fig. 2 and 3 contains a classic teletext decoder, to which the deciphering block has been added. Practically the user behaves in the same way as with a normal teletext receiver. The MPU block receives the commands requesting a page (for instance through a keyboard or a remote control unit) and forwards the request to the decoder. The received page is stored in the page memory M and analyzed by the MPU block itself; if the received page is not ciphered, the MPU block provides for the displaying of the page, while on the contrary case provides for deciphering it.

Deciphering is performed according to the basic circuit of figure 1, after obvious preliminary controls as the hardware availability check. For ciphering there are used logics with not linear feedback, so as to produce very long pseudocasual bits sequences. Such very long pseudocasual sequences, if used for only a part of the their total length, may be considered truly casual and therefore undeducible.

The semicustom deciphering circuit (ASIC) contains a one time programmable (OTP) sequential logic, similar to a programmable array logic (PAL). The length of sequences and key word shall be related to the desired security degree of the delivered information service. In any case it is obvious that he who supplies the information service supplies also the decoding card.

The user could periodically buy a card of negligible industrial cost. The card shall be programmed immediately before the sale by the supplier of the information service, which by means of an appropriate programming device will be able to record the code thereon.

At the end of the validity period the transmitted code will be changed and the card becomes unusable.

In case of a digital signal, a well known ciphering system may be obtained performing the logic EXOR (exclusive OR) operation on original message and key word; the ciphered signal is in turn deciphered in the decoder by means of the same EXOR operation with the same key word.

Advantageously an utilization of the system according to the invention may take place in the future in case of digitalized transmission of television signals, which may happen, for instance, via satellite, in view of the great coverage that of such broadcasting method.

Even in case of analogic transmission, it is known that in many cases digitalized signals are used in the studios, owing to the advantages they show, so that the described implementation (EXOR ciphering) may be successfully used; in such cases in the receiver it will be necessary, after the normal demodulation of the analogic signal, to digitalize again the video signal (as already customary in many modern receivers), decipher and display it.

Characteristics of the described system are clear from the description given and from the attached drawings.

Also clear are the advantages of the television system according to the invention.

Particularly they are represented by the fact that the user only needs one or more cards, which are light and show a sufficiently long period of validity, that no more cumbersome coin inserting device are needed, because the pay system is completely electronic.

It is clear that many variations to the system and to the devices which have been described as an example are possible to the skilled in the art, without departing from the novelty principles inherent to the invention as defined in the claims.

## Claims

1. Method for receiving and recording television signals coded in such a way that they cannot be reproduced normally by normal television receivers, but only by receivers provided of special decoders, which can be activated by means of a suitable card containing an element to memorize data, and that on said element there is prerecorded a secret code (CS), which is necessary to activate the decoder (D, 6),
characterized in that the secret code (CS) is inserted in the transmitted television signal only during the useful parts of the transmission, excluding advertising such that the recorded transmission does not contain advertising.

2. Method according to claim 1,
characterized in that the decoder (D, 6) starts automatically recording of a videorecorder coupled to the decoder when receiving the useful parts of a transmission containing the secret code (CS) corresponding to that recorded on the card (CC).

3. System for transmitting and receiving television signals coded in such a way that they cannot be reproduced normally by normal television receivers, but only by receivers provided of special decoders, which can be activated by means of a suitable card, wherein said card (CC) contains an element to memorize data, and that on said element there is prerecorded a secret code (CS), which is necessary to activate the decoder (D, 6) and that the system provides for the possibility of watching to a plurality of different transmissions,
characterized in that the secret code (CS) is inserted in the transmitted television signal only during the useful parts of the transmission, excluding advertising, the decoder (D, 6) contains means to automatically start a videorecorder coupled to it, so as to record the transmissions containing a secret code (CS) corresponding to that recorded onto the card (CC), and only those and said system is adapted so that the recorded transmission does not contain advertising.

4. Apparatus for receiving coded television signals transmitted in the system according to claim 3, the received coded television signals being decoded and thereafter recorded by a videorecorder,
characterized in that the received secret code (CS) provides a record only during the useful parts of the transmission excluding advertisement.

## Patentansprüche

1. Verfahren zum Empfangen und Aufzeichnen von Fernsehsignalen, die so codiert sind, daß sie normalerweise nicht von üblichen Fernseh-Empfängern reproduziert werden können, sondern nur von Empfängern mit speziellen Decodern, die mittels einer geeigneten Karte aktiviert werden können, die ein Element zum Speichern von Daten aufweist, wobei sich auf dem Element ein vor-aufgezeichneter Geheimcode (CS) befindet, der erforderlich ist, um den Decoder (D, 6) zu aktiveren,
dadurch gekennzeichnet, daß
der Geheimcode (CS) nur während nützlicher Teile der Übertragung ohne Werbung in das übertragene Fernsehsignal eingefügt wird, so daß die aufgezeichnete Übertragung keine Werbung enthält.

2. Verfahren nach Anspruch 1,
dadurch gekennzeichnet, daß der Decoder (D, 6) automatisch die Aufzeichnung mit einem mit dem Decoder gekoppelten Videorecorder startet, wenn er die nützlichen Teile der Übertragung empfängt, die den Geheimcode (CS) enthalten, der dem auf der Karte (CC) aufgezeichneten entspricht.

3. System zum Übertragen und Empfangen von Fernsehsignalen, die so codiert sind, daß sie normalerweise nicht von üblichen Fernseh-Empfängern reproduziert werden können, sondern nur von Empfängern mit speziellen Decodern, die mittels einer geeigneten Karte aktiviert werden können, die ein Element zum Speichern von Daten aufweist, wobei sich auf dem Element ein vor-aufgezeichneter Geheimcode (CS) befindet, der erforderlich ist, um den Decoder (D, 6) zu aktiveren, und wobei das System die Möglichkeit bereitstellt, sich eine Mehrzahl von verschiedenen Übertragungen anzusehen,
dadurch gekennzeichnet, daß der Geheimcode (CS) nur während nützlicher Teile der Übertragung ohne Werbung in das übertragene Fernsehsignal eingefügt wird, daß der Decoder (D, 6) Mittel zum automatischen Starten eines mit dem Decoder gekoppelten Videorecorders aufweist, um nur die Übertragungen aufzuzeichnen, die einen Geheimcode (CS) enthalten, der dem auf der Karte (CC) aufgezeichneten entspricht, und daß das System angepaßt ist, so daß die aufgezeichnete Übertragung keine Werbung enthält.

4. Vorrichtung zum Empfangen von codierten Fernsehsignalen, die in einem System nach Anspruch 3 übertragen worden sind, wobei die empfangenen codierten Fernsehsignale decodiert werden und danach von einem Videorecorder aufgezeichnet werden,
dadurch gekennzeichnet, daß der empfangene Geheimcode (CS) eine Aufzeichnung nur während der Übertragung nützlicher Teile ohne Werbung bereitstellt.

## Revendications

1. Procédé de réception et d'enregistrement de signaux de télévision codés de telle sorte qu'ils ne peuvent pas être reproduits normalement par des récepteurs de télévision normaux, mais seulement par des récepteurs munis de décodeurs spéciaux pouvant être activés au moyen d'une carte appropriée contenant un élément destiné à mémoriser des données, un code secret (CS) étant pré-enregistré sur ledit élément et nécessaire pour activer le décodeur (D, 6),
caractérisé en ce que le code secret (CS) est introduit dans le signal de télévision transmis uniquement pendant les parties utiles de la transmission, excluant la publicité de façon à ce que la transmission enregistrée ne comporte pas de publicité.

2. Procédé selon la revendication 1, caractérisé en ce que le décodeur (D, 6) lance automatiquement l'enregistrement d'un enregistreur vidéo couplé au décodeur lors de la réception des parties utiles d'une transmission contenant le code secret (CS) correspondant à celui enregistré sur la carte (CC).

3. Système de transmission et de réception de signaux de télévision codés de telle sorte qu'ils ne peuvent pas être reproduits normalement par des récepteurs de télévision normaux, mais seulement par des récepteurs munis de décodeurs spéciaux pouvant être activés au moyen d'une carte appropriée, dans lequel ladite carte (CC) contient un élément destiné à mémoriser des données, un code secret (CS) étant pré-enregistré sur ledit élément et nécessaire pour activer le décodeur (D, 6) et le système donnant la possibilité de regarder une pluralité de transmissions différentes,
caractérisé en ce que le code secret (CS) est introduit dans le signal de télévision transmis uniquement pendant les parties utiles de la transmission, excluant la publicité, et en ce que le décodeur (D, 6) contient des moyens permettant de lancer automatiquement un enregistreur vidéo qui lui est couplé de manière à enregistrer les transmissions contenant un code secret (CS) correspondant à celui enregistré sur la carte (CC) et uniquement celles-ci, et en ce que ledit système est adapté de telle sorte que la transmission enregistrée ne comporte pas de publicité.

4. Appareil de réception de signaux de télévision transmis dans le système selon la revendication 3, les signaux de télévision codés reçus étant décodés et ensuite enregistrés par un enregistreur,
caractérisé en ce que le code secret (CS) reçu permet un enregistrement uniquement pendant les parties utiles de la transmission, excluant la publicité.
